# EUROPÄISCHE PATENTSCHRIFT

(11) **EP 2 173 676 B1**
(45) Veröffentlichungstag und Bekanntmachung des Hinweises auf die Patenterteilung: **21.10.2015**
(21) Anmeldenummer: 08784309.0
(22) Anmeldetag: 07.07.2008
(51) Int. Cl.: C03C 3/06, C03C 3/083, C03C 3/091, C03C 3/093, C03C 13/00, C03C 25/66

(54) **HOCHTEMPERATURBESTÄNDIGE ANORGANISCHE FASER AUF KIESELSÄUREBASIS SOWIE VERFAHREN ZUR HERSTELLUNG DERSELBEN**
HIGH-TEMPERATURE-RESISTANT INORGANIC FIBRE BASED ON SILICA AND PROCESS FOR PRODUCING THE SAME
FIBRE INORGANIQUE À BASE D'ACIDE SILICIQUE RÉSISTANTE AUX TEMPÉRATURES ÉLEVÉES ET SON PROCÉDÉ DE FABRICATION

(30) Priorität: 12.07.2007 DE 102007032391
(43) Veröffentlichungstag der Anmeldung: 14.04.2010
(73) Patentinhaber: Belchem Fiber Materials Gmbh, 09599 Freiberg (DE)
(72) Erfinder: RICHTER, Robin, 09599 Freiberg (DE); STEDEN, Folker, 01187 Dresden (DE); LEHR, Sven, 81549 München (DE)
(74) Vertreter: Stoppkotte, Cornelia
(86) Internationale Anmeldenummer: PCT/DE2008/001123
(87) Internationale Veröffentlichungsnummer: WO 2009/006882

(56) Entgegenhaltungen:
- EP-A- 0 510 653
- WO-A-2007/035131
- DE-A1- 19 724 874
- DE-U1- 29 823 432
- LU-A1- 41 799
- US-A- 2 491 761
- US-A- 3 687 850
- MATSUNO KICHIYA: "HEAT-RESISTANT POROUS ALUMINA-SILICA FIBERS" CHEMICAL ABSTRACTS, AMERICAN CHEMICAL SOCIETY, US, Bd. 109, Nr. 2, 1. Juli 1988 (1988-07-01), Seite 261, XP000057068 ISSN: 0009-2258

## Beschreibung

Die vorliegende Erfindung betrifft eine hochtemperaturbeständige anorganische Faser auf Kieselsäurebasis mit verbesserten mechanischen Eigenschaften, ein Verfahren zu deren Herstellung sowie spezielle Verwendungen von und Produkte aus dieser.

Es gibt eine Vielzahl anorganischer Fasern im Hochtemperatursegment. Beispiele sind unter anderem Silex^{®}-Fasern, Silikafasern, Glasfasern, keramische Fasern, biolösliche Fasern, polykristalline Fasern und Quarzfasern. Diese hochtemperaturbeständigen Fasern sind praktisch in allen Bereichen des Lebens, in denen hohe Temperaturen beherrscht werden müssen, präsent. Anwendungen finden sich in allen Industrien, von großindustriellen Anlagen wie der Verhüttung von metallischen Erzen, der Stahl- und Aluminiumerzeugung, Industrieofenbau, Luft- und Raumfahrt, Brandschutz in Gebäuden, bis zu Verstärkung von Kunststoffen und Betonen, Haushaltsgerätetechnik und in den Emissionskontrollanlagen der Automobil-und Nutzfahrzeugindustrie.

Anorganische Fasern haben in moderneren High-tech-Anwendungen neben der Funktion der Hochtemperaturwärmedämmung und -isolierung noch häufig weitere Funktionen zu erfüllen, die stark von ihren mechanischen Kennwerten abhängen. Als Beispiel können Verstärkungsfasern angeführt werden, die neben ihrer funktionalisierten Oberfläche zur besseren Anbindung an ihr umgebendes Medium gleichzeitig möglichst hohe Zugfestigkeiten aufweisen sollten. Als ein spezielles Beispiel müssen anorganische Fasern, die in Lagerungsmatten für Monolithe in Abgasanlagen der Automobilindustrie Verwendung finden, z.B. neben guten Wärmedämmungseigenschaften bis zu 1100°C noch ausreichende Flexibilität zeigen, um bei wechselnden Spaltgrößen noch entsprechende Haltekraft zu demonstrieren. Viele Faserwerkstoffe werden in textiltechnischen Folgeprozessen wie Garnen, Zwirnen, Weben, Stricken u. ä. zu textilen Produkten weiterverarbeitet. Auch hier sind die mechanischen Kennwerte von großer Bedeutung, um z.B. Abrisse bei Zwirn- oder Webprozessen zu vermeiden.

Was die Herstellung hochtemperaturbeständiger anorganischer Fasern betrifft, so gibt es die unterschiedlichsten Möglichkeiten hochtemperaturbeständige anorganische oxidische amorphe oder polykristalline Fasern herzustellen. Die klassischen Mineralfasern enthalten als Hauptbestandteil SiO₂ und Al₂O₃, mit Gewichtsanteilen von Al₂O₃ über 40 Gew.-%. Zusätzlich existieren je nach angestrebtem Anwendungsbereich chemische Zusammensetzungen, die zusätzlich Alkali- und Erdalkalioxide Li₂O, Na₂O, K₂O, MgO, CaO und Übergangsmetalloxide wie z.B. TiO₂, ZrO₂ und Y₂O₃ enthalten. Man unterscheidet grob Aluminiumsilikatfasern oder RCF (Refractory Ceramic Fiber), Hochtemperaturglasfasern, AES (biolösliche Fasern), polykristalline, über Sol-Gel-Prozesse hergestellte Fasern und Silikatfasern.

Grundsätzlich setzt man drei Verfahren der Fasererzeugung ein. Ist die heterogene Mischung aus Gesteinen zu wirtschaftlichen Bedingungen schmelzbar, wird die Schmelze über eine Rinne dem so genannten "Spinner", einer rotierenden Scheibe, zugeführt, wo über das Rotationsspinnverfahren durch tangentiale Ablenkung der Schmelztropfen Fasern gezogen werden. Dieses Verfahren erlaubt naturgemäß nur eine geringe Kontrolle über den Faserdurchmesser. Außerdem enthält die Rohfaser eine nicht unerhebliche Menge an nicht zerfasertem Material, so genannten "Shots", die in nachfolgenden Prozessschritten aufwendig entfernt werden müssen. Lässt sich das Ausgangsgemenge nur bei extrem hohen Temperaturen verflüssigen, wie es bei Mischungen mit hohem Al₂O₃-Anteil > 63 Gew.-% der Fall ist, kommen Sol-Gel-Verfahren zur Anwendung. In diesem sehr aufwendigen Prozess werden durch das Pressen von wässrigem organometallhaltigem Spinngel oder kolliodalen SiO₂- bzw. Al₂O₃-Spinnlösungen durch Düsen Fasern gebildet, die in einem anschließenden Wärmebehandlungsschritt gebrannt werden. Eine elegante Methode, um hochtemperaturbeständige amorphe Fasern mit hohem Siliciumdioxidgehalt zu erhalten, ist die Behandlung von alkalimetallreichen niedrigschrnelzenden Glasprecursoren mit Säure, die durch das Platinschmelzwannen-Trommelabzugsverfahren hergestellt wurden. Durch den säureinduzierten, diffusionskontrollierten Ionenaustauschprozess können Fasern mit über 99% SiO₂ Anteil erhalten werden. Dabei werden einwertige Alkalimetalle wie Li, Na und K meist vollständig, zweiwertige Erdalkalimetalle nur teilweise und dreiwertige Metalle (mit Ausnahme des Bors) wie Aluminium nur in Spuren aus dem Verband der kondensierten Kieselsäure gegen Protonen der Säure getauscht.

Dass durch Säurebehandlung eines mit Metallatomen durchsetzten amorphen Netzwerks aus kondensierter Kieselsäure diese temperaturbeständiger gemacht werden kann, ist in zahlreichen Patenten beschrieben (US 2 494 259, EP 510 653, GB 976 565, EP 236 735, US 2 718 461).

In den aufgeführten Verfahrensweisen wird meist Glasfaser in ungeordneter Weise in Form von Schüttungen, Filzen oder Matten in die Säure eingebracht und anschließend von der Restsäure und dem reaktionsbedingt entstandenen Salz durch Spülen mit Wasser gereinigt. Bei dieser Methode treten oft durch unkontrollierbare Überschreitungen von Löslichkeitsprodukten an der Faseroberfläche Schädigungen der Faser, so genannte Versalzungen oder Verkieselungen auf, die zu starker Abnahme der mechanischen Kennwerte (Zugfestigkeit, Bruchkraft, Elastizität, usw.) führen. Besser eignet sich das in dem früheren Patent EP 0 973 697 beschriebene Verfahren der Säureextraktion von Stapelfasergarnen auf Textilgarnhülsen. Hierbei wird in einer Pt-Rh-Düsenleiste ein Glasprecursor mit hohem Alkalimetallgehalt und 1 - 5 Gew.-% Al₂O₃ aufgeschmolzen und Stapelfasern mit Hilfe des Abzugstrommelverfahrens hergestellt. Dabei werden die Fasern aufgewickelt, durch die in einem zweiten Schritt organische oder anorganische Säure gespült wird. Die Säure setzt einen diffusionskontrollierten Ionenaustauschprozess in Gang, bei dem metallische Atome, die sich aus der Struktur lösen können, gegen Protonen ausgetauscht werden. Anschließend wird die Faser in einer Trockeneinrichtung getrocknet. Diese schonende Methodik erlaubt die Herstellung von Stapelfaservorgarnen, die in Temperaturbereichen von bis zu 1250°C einsetzbar sind.

Die folgende Tabelle 1 zeigt eine Zusammenfassung derzeit verwendeter chemischer Zusammensetzungen anorganischer hochtemperaturbeständiger oxidischer Fasern. Alle Angaben sind in Gew.-%.

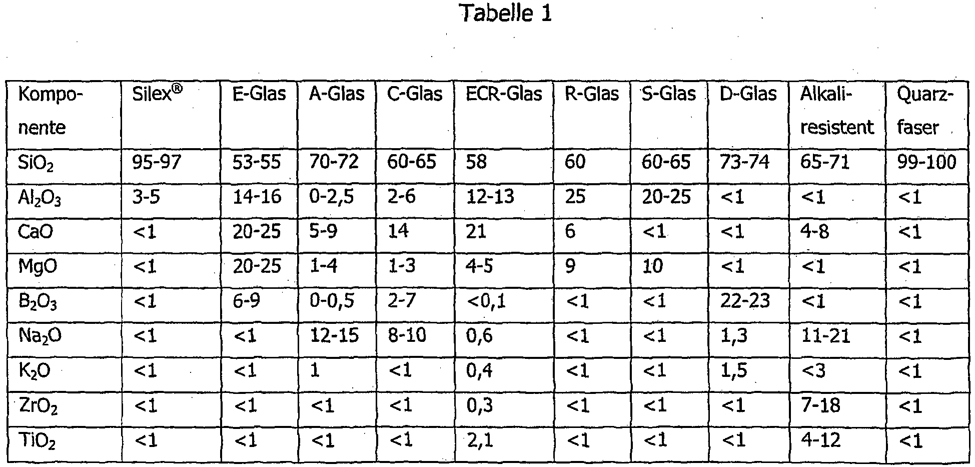

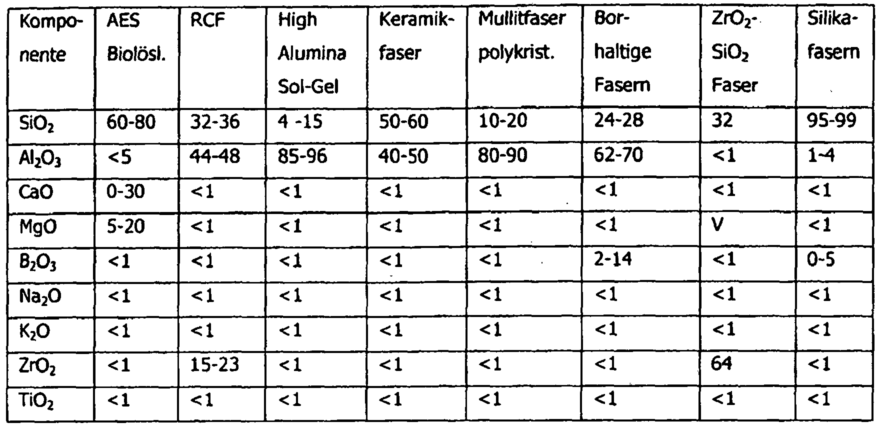

Bei den vielfältigen Anforderungen an moderne Fasern im Hinblick auf Hochtemperaturbeständigkeit einerseits und gute mechanische Eigenschaften wie z.B. Zugfestigkeit, Bruchkraft, Elastizität usw. andererseits besteht trotz der Vielzahl an bisher verfügbaren Fasern nach wie vor ein Bedarf für Fasern mit verbesserten Eigenschaften.

Aufgabe der vorliegenden Erfindung ist daher, hochtemperaturbeständige anorganische Fasern auf Kieselsäurebasis bereitzustellen, die im Vergleich zu den bisher bekannten hochtemperaturbeständigen anorganischen Glasfasern verbesserte mechanische Eigenschaften aufweisen.

Die Aufgabe wird gelöst durch eine hochtemperaturbeständige anorganische Faser auf Kieselsäurebasis gemäß Anspruch 1, ein Verfahren zur Herstellung solcher Fasern gemäß Anspruch 8, Verwendungen derselben gemäß Anspruch 11 und Anspruch 12 sowie Faserprodukte gemäß Anspruch 13 bis Anspruch 15.

Erfindungsgemäß wird eine hochtemperaturbeständige anorganische Faser auf Kieselsäurebasis bereitgestellt, welche die folgende Zusammensetzung aufweist:
81 - 94 Gew.-% SiO₂
6 - 19 Gew.-% Al₂O₃
2 - 12 Gew.-% ZrO₂ und/oder 2-12 Gew.-% TiO₂
0 - 3 Gew.-% Na₂O
sowie maximal 1,5 Gew.-% weitere Komponenten.

Die weiteren Komponenten können dabei beispielsweise Li₂O, K₂O, CaO, MgO, SrO, BaO, alle Übergangsmetalloxide wie insbesondere Y₂O₃ und La₂O₃ und Fe₂O₃ oder farbgebende Metallionen sein.

Bei der erfindungsgemäßen Faser handelt es sich um eine hochtemperaturbeständige anorganische, amorphe, gesundheitlich unbedenkliche Faser auf Basis eines mit Hilfe von metallischen Fremdatomen (Aluminium und Zirkonium und/oder Titan) modifizierten, metastabilen Netzwerks kondensierter Kieselsäure. Hochtemperaturbeständig bedeutet dabei dass eine einzelne Faser eine von Null verschiedene Zugfestigkeit nach einer mindestens zweistündigen Temperaturbehandlung bei mindestens 1100°C, vorzugsweise bis 1200°C und insbesondere bis ca. 1250°C aufweist.

Überraschend wurde gefunden, dass das amorphe Netzwerk durch die Fremdatome Aluminium und Zirkonium und/oder Titan gezielt beeinflusst werden kann und mechanische Eigenschaften verbessert werden können.

Die Dotierung des amorphen SiO₂-Netzwerkes behindert nachweisbar den Transfer der metastabilen Phase in die energetisch günstigere, symmetrische kristalline Phase. Überraschenderweise konnte gezeigt werden, dass die mechanischen Kennwerte wie Elastizitätsmodul, Elastizität, Zugfestigkeit, Elongation, Bruchkraft, Flexibilität usw. der Monofilamente eine starke Abhängigkeit vom Dotierungsrad der metallischen und übergangsmetallischen netzwerkbildenden Fremdatomen aufweisen. Dabei haben sich die oben genannten Gewichtsanteile von Aluminium, Zirkonium und Titan als besonders geeignet erwiesen. Der Dotierungsgrad erlaubt somit die in der anschließenden Anwendung gewünschten mechanischen Kennwerte einzustellen.

Besonders gute mechanische Eigenschaften wie die Steigerung der Zugfestigkeit eines Einzelfilamentes bei 1100°C um 50 - 100% gegenüber einer in dem früheren Patent EP 0 973 697 beschriebenen Faser konnten mit einem Gehalt von ca. 6 - 13 Gew.-% Al₂O₃, insbesondere bei einem Gehalt von ca. 8 - 13 Gew.-% Al₂O₃ und besonders bevorzugt bei einem Gehalt von ca. 8 - 11 Gew.-% Al₂O₃ erhalten werden.

Bevorzugte Bereiche für Zirkoniumoxid und Titanoxid sind ca. 2 - 9 Gew.-% ZrO₂ und/oder ca. 2 - 9 Gew.-% TiO₂, wobei die Bereiche von ca. 3 - 7 Gew.-% ZrO₂ und/oder ca. 3 - 7 Gew.-% TiO₂ zu Fasern mit besonders günstigen mechanischen Eigenschaften führen.

Was den Gehalt an Natriumoxid betrifft, so ist es im Hinblick auf die Hochtemperaturbeständigkeit von Vorteil, wenn der Gehalt so niedrig wie möglich ist. So ist ein Bereich von ca. 0 - 2 Gew.-% Na₂O bevorzugt, und ein Bereich von ca. 0 - 1 Gew.-% Na₂O, insbesondere ca. 0 - 0,5 Gew.-% Na₂O, ist besonders bevorzugt.

Die erfindungsgemäßen Fasern können sowohl in Form von Filamenten als auch in Form von Stapelfasern vorliegen.

Der Faserdurchmesser der erfindungsgemäßen Fasern beträgt vorzugsweise von 3 bis 40 µm, insbesondere von 6 bis 25 µm.

Besonders bevorzugte hochtemperaturbeständige, auf Kieselsäure basierende, anorganische Fasern weisen nach einer zweistündigen Wärmebehandlung bei 1100°C die folgenden Eigenschaften auf:
Elongation [%] = 1,4 - 1,6
E-Modul [GPa] = 45 - 53
Bruchkraft [mN] = 20-25
Zugfestigkeit [MPa] = 600 - 750

Die gemessenen Fasern hatten dabei einen durchschnittlichen Durchmesser von 6,5 µm +/- 0,5 µm.

Noch bevorzugter sind Fasern, die durch Säureextraktion einer Ausgangsglaszusammensetzung mit der folgenden Zusammensetzung erhältlich sind:
55 - 80 Gew.-% SiO₂
5 - 19 Gew.-% Al₂O₃
15 - 26 Gew.-% Na₂O
2 - 12 Gew.-% ZrO₂ und/oder 2-12 Gew.-% TiO₂
sowie maximal 1,5 Gew.-% weitere Komponenten.

Besonders bevorzugt sind dabei Ausgangsglaszusammensetzungen, die 60 bis 73 Gew.-% SiO₂, 5 bis 12 Gew.-% Al₂O₃, 20 bis 26 Gew.-% Na₂O, 0 bis 7 Gew.-% ZrO₂, 0 bis 7 Gew.-% TiO₂ sowie maximal 1,5 Gew.-% weitere Komponenten enthalten.

Die chemisch-physikalischen Eigenschaften der Produktfaser werden auch durch den Herstellungsprozess beeinflusst. Eine Herstellung durch Säureextraktion der oben genannten Ausgangsglaszusammensetzung, bei welcher das Alkalimetalloxid im Wesentlichen entfernt wird, führt zu einer ungewöhnlich hohen Temperaturbeständigkeit und besonders guten mechanischen Kennwerten.

Die vorliegende Erfindung ist ebenfalls auf ein Verfahren zur Herstellung von hochtemperaturbeständigen anorganischen Fasern auf Kieselsäurebasis, wie sie oben beschrieben werden, gerichtet, welches die folgenden Schritte umfasst:
a) Schmelzen einer Ausgangsglaszusammensetzung, welche die folgende Zusammensetzung aufweist:
   55 - 80 Gew.-% SiO₂
   5 - 19 Gew.-% Al₂O₃
   15 - 26 Gew.-% Na₂O
   2 - 12 Gew.-% ZrO₂ und/oder 2-12 Gew.-% TiO₂
   sowie maximal 1,5 Gew.-% weitere Komponenten;
b) Bildung von Filamenten oder Stapelfasern aus der Schmelze in Schritt a);
c) Säureextraktion der in Schritt b) erhaltenen Filamente oder Stapelfasern;
d) Spülen der extrahierten Filamente oder Stapelfasern aus Schritt c), um Säurereste und/oder Salzreste zu entfernen; und
e) Trocknen der in Schritt d) erhaltenen Filamente oder Stapelfasern.

Die Säurebehandlung in Schritt c) des Verfahrens kann sowohl mit einer organischen als auch einer anorganischen Säure durchgeführt werden und wird insbesondere mit Salzsäure, Schwefelsäure, Salpetersäure oder Phosphorsäure bzw. Essigsäure, Ameisensäure oder Oxalsäure durchgeführt.

Die Temperatur während der Säurebehandlung beträgt dabei vorzugsweise von 35 bis 80°C, vorzugsweise von 45 bis 65°C. Die Dauer des nasschemischen Prozesses hängt von dem erwünschten Reinheitsgrad, insbesondere der temperaturstabilitätsbedingenden Konzentration der Alkalimetallatome, der herzustellenden Faser ab. Um maximale Temperaturbeständigkeit zu erhalten, sollte die Reaktion nicht unter 8 Stunden durchgeführt werden. Im Hinblick auf die Säurebehandlung wird ebenfalls auf die in dem früheren Patent EP 0 973 697 beschriebenen Bedingungen verwiesen.

Die Spülung in Schritt d) erfolgt vorzugsweise mit Wasser bis keine Säurereste bzw. Salzreste mehr feststellbar sind.

Was die Trocknung im letzten Schritt e) betrifft, so findet diese bevorzugt bei 100 bis 130°C, besonders bevorzugt bei ca. 120°C statt. Besonders bevorzugt wird die Faser durch eine RF-Trocknung (Radiofrequenztrocknung) getrocknet, da hierdurch die Oberflächeneigenschaften der Faser besonders vorteilhaft beeinflusst werden.

Beispielsweise wird ein niedrig schmelzender Glasprecursor in einer Platin-Rhodium-Schmelzwanne verflüssigt und anschließend durch Abziehen der Schmelze in Form von Glasfilamenten oder Stapelfasern auf Wickler oder rotierende Trommeln aufgenommen. In einem anschließenden Ionenaustauschverfahren in einem Säurebad werden die netzwerkwandelnden Kationen durch Protonen getauscht und somit die finalen Eigenschaften der Fasern erzeugt. Es hat sich dabei gezeigt, dass die Devitrifikationsgrenze des amorphen Feststoffes durch die Dotierung des SiO₂-Netzwerkes mit Übergangsmetallen wie Titan oder Zirkonium sowie durch Variation des Aluminiumgehaltes zu höheren Temperaturen hin verschieben lässt.

Bei dem erfindungsgemäßen Verfahren werden Rohgläser mit einem Na₂O-Gehalt von mindesten 15 Gew.-%, aber nicht mehr als 26 Gew.-%, einem SiO₂-Gehalt zwischen 55 Gew.-% und 80 Gew.-%, einem Al₂O₃-Gehalt von 5 bis 19 Gew.-% und einem Gehalt an den Übergangsmetallen ZrO₂ und TiO₂ bis 12 Gew.-% verwendet. Die Ionen Al³⁺, TiO²⁺ bzw. Ti⁴⁺ und ZrO²⁺ bzw. Zr⁴⁺ verbleiben bei der Säurebehandlung im Si-O-Netzwerk. Die Alkalimetallionen tauschen nahezu vollständig mit den Protonen aus der Säure. Daraus ergeben sich mögliche chemischen Zusammensetzungen der erfindungsgemäßen Faser nach Ionenaustauschprozess wie sie oben aufgeführt sind.

Überraschenderweise konnte festgestellt werden, dass die nach dem Ionenaustauschprozess im amorphen Netzwerk verbleibenden Metallatome die mechanischen, chemischen und physikalischen Eigenschaften derart beeinflussen, dass sie als Inhibitoren der Rekristallisationsneigung der Kieselsäure fungieren oder beispielsweise Zugfestigkeiten von Einzelfilamenten positiv verändern. Eine zusätzliche Möglichkeit, die mechanischen Eigenschaften der auf dem beschriebenen Wege hergestellten Fasern zu beeinflussen, birgt eine dem Ionenaustauschprozess nachfolgende Temperaturbehandlung des Werkstoffes. Die aus dem Verband der kondensierten Kieselsäure durch Protonen ausgetauschten Metallionen hinterlassen je nach Wertigkeit eine bestimmte Anzahl von Hydroxylgruppen, die als Endstellen des Netzwerks fungieren. Diese Hydroxylgruppen können unter Abspaltung von H₂O bei gleichzeitiger Bildung von neuen Si-O-Si-Bindungen so genanntes chemisch gebundenes Wasser freisetzen. Diese Schließung des amorphen Netzwerks bewirkt eine drastische Abnahme der Elongation mit einhergehender signifikanter Vergrößerung des Elastizitätsmoduls (siehe z.B. Tabelle 2 unten).

Schließlich betrifft die vorliegende Erfindung die Verwendung von hochtemperaturbeständigen anorganischen Fasern auf Kieselsäurebasis, wie sie oben beschrieben werden, zur Herstellung zugfester Garne und zur Herstellung von Lagermatten für Katalysatoren sowie von weiteren Produkten aus den erfindungsgemäßen hochtemperaturbeständigen anorganischen Fasern.

Besonders bevorzugte Produkte sind dabei Schnittfasern und die bereits erwähnten zugfesten Garne, Zwirne (Stapelfaser- und Filamentgarne), Vliesstoffe, Gewebe, Bänder, Packungen, Gewirke und Gestricke. Bevorzugte Produkte hieraus sind z.B. Lagermatten in Emissionskontrollanlagen der Automobil- und Nutzfahrzeugindustrie, Produkte für Anwendungen im Ofenbau und in der Brandschutzindustrie (Brandvorhänge, feuerfeste Bezüge für Sitzmöbel in allen Verkehrsmitteln usw.) sowie persönliche Schutzausrüstung.

Die Erfindung wird nun detaillierter in Bezug auf die folgenden Beispiele und die Figur beschrieben, welche die Erfindung aber lediglich veranschaulichen und nicht beschränken sollen.

Die Figuren zeigen:

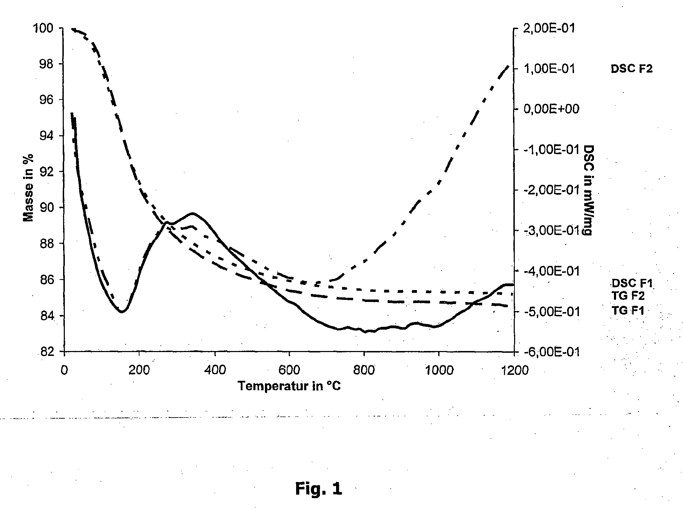

Fig. 1: eine graphische Darstellung der D5C/TG-Kurven der Fasern aus Beispiel 1 mit unterschiedlichem Aluminiumgehalt.

### Beispiele

### Vergleichsbeispiel 1: Erhöhung des Rekristallisationswiderstandes/Erhöhung der Einsatztemperatur

Ein wichtiges Merkmal einer hochtemperaturbeständigen Faser ist naturgemäß die maximale Einsatztemperatur. Hierbei ist im Allgemeinen nicht der Schmelzbereich des Materials ausschlaggebend, sondern die Temperatur, bei der der Werkstoff seine fasertypischen Eigenschaften verliert. Ein gutes Maß hierfür ist die Zugfestigkeit einer Faser. Geht diese gegen Null, kann nicht mehr von einem Faserwerkstoff gesprochen werden. Das nachfolgende Beispiel soll demonstrieren, wie die Zugfestigkeit einer Einzelfaser von dem aus dem eingesetzten Rohglas vorgegebenen und dem Herstellungsverfahren abhängigen Aluminiumgehalt beeinflusst werden kann. In den nachfolgenden chemischen Zusammensetzungen ist in der Struktur gebundenes Wasser nicht berücksichtigt.

Ein Glasgemenge bestehend aus 67 Gew.-% SiO₂, 6,8 Gew.-% Al₂O₃, 25,2 Gew.-% Na₂O und 1,0 Gew.-% weiteren Komponenten wird in einer Pt-Rh-Düsenleiste bis zur Verflüssigung erhitzt. Die aus den an der Unterseite der Düsenleiste angebrachten Öffnungen austretenden Glasfäden werden mittels einer rotierenden Trommel aufgenommen, axial zur Trommel von einem Wickler abgezogen und aufgespult. Diese Spulen werden anschließend ca. 8 Stunden bei einer Temperatur von mindestens 40°C (besser 60°C) mit 20%iger Salzsäure durchspült. Anschließend wird das durch die Reaktion entstandene Salz und die Restsäure durch mehrere Spülvorgänge mit Kaltwasser (Raumtemperatur) aus dem Faserverbund entfernt. Die Spulen lässt man gut abtropfen und trocknet sie anschließend 24 h mit Heißluft von mindestens 70°C bis zur Gewichtskonstanz. Nach diesem Prozess wies die erhaltene Faser (**F1**) die folgende chemische Zusammensetzung auf: 90,6 Gew.-% SiO₂, 8,7 Gew.-% Al₂O₃, 0,2 Gew.-% Na₂O, 0,5 Gew.-% weitere Komponenten.

Um die Veränderung im Aufbau der Struktur des Festkörpers als Funktion der Temperatur (Rekristallisation) zu messen, wurde die Faser einer DSC/TG (Differentialscanningkalorimetrie/Thermogravimetrie)-Messung unterzogen (Fig. 1).

Um den Unterschied der Strukturveränderung in Abhängigkeit des Aluminiumgehaltes zu demonstrieren, wurde eine zweite Vergleichsglasmischung entsprechend dem früheren Patent EP 0 973 697 unter den gleichen Bedingungen zu Fasermaterial umgesetzt. Die Ausgangsglaszusammensetzung enthielt 72 Gew.-% SiO₂, 3,5 Gew.-% Al₂O₃, 24 Gew.-% Na₂O und 0,5 Gew.-% weiterer Komponenten. Die daraus resultierende Endzusammensetzung der Faser (**F2**) nach dem Ionenaustauschprozess war: 95,1 Gew.-% SiO₂, 4,2 Gew.-% Al₂O₃, 0,15 Gew.-% Na₂O und 0,55 Gew.-% weitere Komponenten. Die DSC/TG-Kurve dieser Faser ist ebenfalls in Fig. 1 gezeigt.

Fig. 1 zeigt die DSC/TG-Kurven von Silex^{®}-Fasern mit unterschiedlichem Aluminiumgehalt (**F1**: 90,6 Gew.-% SiO₂, 8,7 Gew.-% Al₂O₃, 0,2 Gew.-% Na₂O, 0,5 Gew.-% weitere Komponenten, **F2**: 95,1 Gew.-% SiO₂, 4,2 Gew.-% Al₂O₃, 0,15 Gew.-% Na₂O und 0,55 Gew.-% weitere Komponenten).

Deutlich ist der unterschiedliche Grad der Rekristallisationsneigung der Fasern zu erkennen. Während **F2** ab 750°C durch kontinuierliche Entglasung (exothermer Verlauf) an Festigkeit einbüßt, beginnt dieser Prozess bei **F1** erst ab ca. 1000°C. Beide Fasertypen zeigen durch den Verdampfungsprozess des physikalisch gebundenen Wassers bis 180°C ein überwiegend endothermes Verhalten. Im Bereich von 200°C - 800°C wird weiteres chemisch gebundenes Wasser aus der Struktur entfernt (endotherm) und neue Si-O-Si-Bindungen geknüpft (exo-therm). Der Massenverlust von ca. 15% Wasser ist bei beiden Faserstoffen annähernd gleich.

Durch den um 200°C später einsetzenden strukturellen Umbau des amorphen Netzwerkes konnten die faserdefinierenden mechanischen Fasereigenschaften wie z.B. Zugfestigkeiten in höhere Temperaturregionen verschoben werden (siehe Tabelle 2 unten). Die Zugfestigkeiten wurden an Einzelfilamenten gemäß dem Verfahren von DIN EN 1007-4 (2004) gemessen.

**Tabelle 2**

| Darstellung der Zugfestigkeiten von Einzelfilamenten nach Temperaturbehandlung | | | | | |
|---|---|---|---|---|---|
| Zugfestigkeit [MPa] | 20°C | 1000°C | 1100°C | 1200°C | 1250°C |
| **F1** | 760 | 520 | 470 | 250 | 150 |
| **F2** | 720 | 470 | 150 | 0 | 0 |

**Beispiel 2:** Erhöhung der Zugfestigkeit bei gleicher Einsatztemperatur/Zugfestere Garne und Zwirne und Flexibilität der Faser bei Temperaturen über 800°C (Einsatz als Lagermatte in Emissionskontrollanlagen der Automobil- und Nutzfahrzeugindustrie)

Die durchmesserabhängige Zugfestigkeit, Dehnung (Elongation) und das Elastizitätsmodul einer Filamentfaser beeinflussen wesentlich die Gesamtzugfestigkeit eines Garns oder Zwirns. Das nachfolgende Beispiel zeigt die Abhängigkeit der Zugfestigkeit vom Aluminiumgehalt und von der Einsatztemperatur. In den nachfolgenden Angaben über chemische Zusammensetzungen ist in der Struktur gebundenes Wasser nicht berücksichtigt.

Ein Glasgemenge bestehend aus 66 Gew.-% SiO₂, 5,3 Gew.-% Al₂O₃, 24 Gew.-% Na₂O, 3,8 Gew.-% ZrO₂ und 0,9 Gew.-% weiterer Komponenten wird in einer Pt-Rh-Düsenleiste bis zur Verflüssigung erhitzt. Die aus den an der Unterseite der Düsenleiste angebrachten Düsen austretenden Glasfäden werden mittels einer rotierenden Trommel aufgenommen, axial zur Trommel von einem Wickler abgezogen und aufgespult. Diese Spulen werden anschließend 12 Stunden bei einer Temperatur von mindestens 40°C (besser 60°C) mit 18%iger Salzsäure durchspült. Anschließend wird das durch die Reaktion entstandene Salz und die Restsäure durch mehrere Spülvorgänge mit deionisiertem Kaltwasser (Raumtemperatur) aus dem Faserverbund entfernt. Die Spulen lässt man gut abtropfen und trocknet sie anschließend 24 h mit Heißluft von mindestens 70°C bis zur Gewichtskonstanz. Nach dem Ionenaustauschprozess wies die erhaltene Faser (**F3**) folgende chemische Zusammensetzung auf: 82,8 Gew.-% SiO₂, 8,9 Gew.-% Al₂O₃, 0,8 Gew.-% Na₂O, 5,7 Gew.-% ZrO₂ und 1,5 Gew.-% weitere Komponenten. Im Vergleich hierzu wurde die Vergleichsfaser **F2** aus Beispiel 1 mit Aluminium aber ohne Zirkonium gemessen (siehe Tabelle 3, Tabelle 4, Tabelle 5 unten).

**Tabelle 3**

| Darstellung der Zugfestigkeiten von Einzelfilamenten in Abhängigkeit von der Temperatur | | | | |
|---|---|---|---|---|
| Zugfestigkeit [MPa] | 20°C | 1000°C | 1100°C | 1200°C |
| **F3** | 490 | 560 | 680 | 0 |
| **F2** | 720 | 470 | 150 | 0 |

**Tabelle 4**

| Darstellung des E-Moduls von Einzelfilamenten in Abhängigkeit von der Temperatur | | | | |
|---|---|---|---|---|
| E-Modul [GPa] | 20°C | 1000°C | 1100°C | 1200°C |
| **F3** | 21,29 | 48,58 | 52,96 | 0 |
| **F2** | 30,27 | 33,32 | 37,11 | 0 |

**Tabelle 5**

| Darstellung der Elongation von Einzelfilamenten in Abhängigkeit der Temperatur | | |
|---|---|---|
| Elongation [%] | 20°C | 1100°C |
| **F3** | 2,40 | 1,21 |
| **F2** | 2,50 | 0,47 |

Alle Messungen wurden gemäß den in DIN EN 1007-4 (2004) beschriebenen Verfahren durchgeführt.

Beispiel 2 zeigt, dass die erfindungsgemäßen Fasern im Vergleich zu den Vergleichsfasern eine verbesserte Zugfestigkeit, ein besseres E-Modul und eine erhöhte Elongation aufwiesen.

## Patentansprüche

1. Hochtemperaturbeständige anorganische Faser auf Kieselsäurebasis, **dadurch gekennzeichnet, dass** diese die folgende Zusammensetzung aufweist:
81 - 94 Gew.-% SiO₂
6 - 19 Gew.-% Al₂O₃
2 - 12 Gew.-% ZrO₂ und/oder 2-12 Gew.-% TiO₂
0 - 3 Gew.-% Na₂O
sowie maximal 1,5 Gew.-% weitere Komponenten.

2. Hochtemperaturbeständige anorganische Faser auf Kieselsäufebasis gemäß Anspruch 1, **dadurch gekennzeichnet, dass** die weiteren Komponenten ausgewählt sind aus Li₂O, K₂O, CaO, MgO, SrO, BaO, Y₂O₃, La₂O₃, Fe₂O₃ sowie Mischungen von diesen.

3. Hochtemperaturbeständige anorganische Faser auf Kieselsäurebasis gemäß Anspruch 1 oder Anspruch 2, **dadurch gekennzeichnet, dass** diese 6 - 13 Gew.-% Al₂O₃, insbesondere 8 - 13 Gew.-% Al₂O₃ und besonders bevorzugt 8 - 11 Gew.-% Al₂O₃ aufweist.

4. Hochtemperaturbeständige anorganische Faser auf Kieselsäurebasis gemäß einem der Ansprüche 1 bis 3, **dadurch gekennzeichnet, dass** diese 2 - 9 Gew.-% ZrO₂, insbesondere 3 - 7 Gew.-% ZrO₂, und/oder 2 - 9 Gew.-% TiO₂, insbesondere 3 - 7 Gew.-% TiO₂, aufweist.

5. Hochtemperaturbeständige anorganische Faser auf Kieselsäurebasis gemäß einem der Ansprüche 1 bis 4, **dadurch gekennzeichnet, dass** diese 0 - 2 Gew.-% Na₂O, vorzugsweise 0 - 1 Gew.-% Na₂O und besonders bevorzugt 0 - 0,5 Gew.-% Na₂O aufweist.

6. Hochtemperaturbeständige anorganische Faser auf Kieselsäurebasis gemäß einem der Ansprüche 1 bis 5, **dadurch gekennzeichnet, dass** diese in Form von Filamenten oder Stapelfasern vorliegt.

7. Hochtemperaturbeständige anorganische Faser auf Kieselsäurebasis gemäß einem der Ansprüche 1 bis 6, **dadurch gekennzeichnet, dass** diese durch Säureextraktion einer Glaszusammensetzung mit der folgenden Zusammensetzung erhältlich ist:
55 - 80 Gew.-% SiO₂
5 - 19 Gew.-% Al₂O₃
15 - 26 Gew.-% Na₂O
2 - 12 Gew.-% ZrO₂ und/oder 2-12 Gew.-% TiO₂
sowie maximal z1,5 Gew.-% weitere Komponenten.

8. Verfahren zur Herstellung von hochtemperaturbeständigen anorganischen Fasern auf Kieselsäurebasis gemäß einem der Ansprüche 1 bis 7, **dadurch gekennzeichnet, dass** es die folgenden Schritte umfasst:
a) Schmelzen einer Ausgangsglaszusammensetzung, welche die folgende Zusammensetzung aufweist:
55 - 80 Gew.-% SiO₂
5 - 19 Gew.-% Al₂O₃
15 - 26 Gew.-% Na₂O
2 - 12 Gew.-% ZrO₂ und/oder 2-12 Gew.-% TiO₂
sowie maximal 1,5 Gew.-% weitere Komponenten;
b) Bildung von Filamenten oder Stapelfasern aus der Schmelze in Schritt a);
c) Säureextraktion der in Schritt b) erhaltenen Filamente oder Stapelfasern;
d) Spülen der extrahierten Filamente oder Stapelfasern aus Schritt c), um Säurereste und/oder Salzreste zu entfernen; und
e) Trocknen der in Schritt d) erhaltenen Filamente oder Stapelfasern.

9. Verfahren zur Herstellung von hochtemperaturbeständigen anorganischen Fasern auf Kieselsäurebasis gemäß Anspruch 8, **dadurch gekennzeichnet, dass** die Säurebehandlung in Schritt c) mit einer an organischen Säure, insbesondere mit Salzsäure, Schwefelsäure, Salpetersäure oder Phosphorsäure, oder mit einer organischen Säure, insbesondere mit Essigsäure, Ameisensäure oder Oxalsäure, durchgeführt wird.

10. Verfahren zur Herstellung von hochtemperaturbeständigen anorganischen Fasern auf Kieselsäurebasis gemäß Anspruch 8 oder Anspruch 9, **dadurch gekennzeichnet, dass** die Säureextraktion bei einer Temperatur von 35 - 80 °C und für eine Dauer von mindestens 6 Stunden durchgeführt wird.

11. Verwendung einer hochtemperaturbeständigen anorganischen Faser auf Kieselsäurebasis gemäß einem der Ansprüche 1 bis 7 oder erhalten nach einem Verfahren gemäß einem der Ansprüche 8 bis 10 zur Herstellung zugfester Garne.

12. Verwendung einer hochtemperaturbeständigen anorganischen Faser auf Kieselsäurebasis gemäß einem der Ansprüche 1 bis 7 oder erhalten nach einem Verfahren gemäß einem der Ansprüche 8 bis 10 zur Herstellung von Lagermatten für Katalysatoren.

13. Faserprodukt aus einer hochtemperaturbeständigen anorganischen Faser auf Kieselsäurebasis gemäß einem der Ansprüche 1 bis 7 oder erhalten nach einem Verfahren gemäß einem der Ansprüche 8 bis 10.

14. Faserprodukt gemäß Anspruch 13, **dadurch gekennzeichnet, dass** es ausgewählt ist aus Schnittfasern, zugfesten Garnen, Zwirnen, Vliesstoffen, Geweben, Bändern, Packungen, Gewirken und Gestricken.

15. Faserprodukt gemäß Anspruch 13 oder 14, **dadurch gekennzeichnet, dass** es ausgewählt ist aus Lagermatten für die Automobil- und Nutzfahrzeugindustrie, Produkten für den Ofenbau, Produkten für die Brandschutzindustrie sowie persönlichen Schutzausrüstungen.

## Claims

1. A high temperature resistant inorganic fiber based on silica, **characterized in that** said fiber has the following composition:
81-94% by weight of SiO₂
6-19% by weight of Al₂O₃
2-12% by weight of ZrO₂ and/or 2-12% by weight of TiO₂
0-3% by weight of Na₂O
and a maximum of 1.5% by weight of further components.

2. A high temperature resistant inorganic fiber based on silica according to claim 1, **characterized in that** the further components are selected from Li₂O, K₂O, CaO, MgO, SrO, BaO, Y₂O₃, La₂O₃, Fe₂O₃, and mixtures thereof.

3. A high temperature resistant inorganic fiber based on silica according to claim 1 or claim 2, **characterized in that** said fiber comprises 6-13% by weight of Al₂O₃, more preferably 8-13% by weight of Al₂O₃, and most preferably 8-11% by weight of Al₂O₃.

4. A high temperature resistant inorganic fiber based on silica according to any of claims 1 to 3, **characterized in that** said fiber comprises 2-9% by weight of ZrO₂, more preferably 3-7% by weight of ZrO₂, and/or 2-9% by weight of TiO₂, more preferably 3-7% by weight of TiO₂.

5. A high temperature resistant inorganic fiber based on silica according to any of claims 1 to 4, **characterized in that** said fiber comprises 0-2% by weight of Na₂O, preferably 0-1% by weight of Na₂O, and most preferably 0-0.5% by weight of Na₂O.

6. A high temperature resistant inorganic fiber based on silica according to any of claims 1 to 5, **characterized in that** said fiber is present in the form of filaments or staple fibers.

7. A high temperature resistant inorganic fiber based on silica according to any of claims 1 to 6, **characterized in that** said fiber can be obtained by acid extraction of a glass composition having the following composition:
55-80% by weight of SiO₂
5-19% by weight of Al₂O₃
15-26% by weight of Na₂O
2-12% by weight of ZrO₂ and/or 2-12% by weight of TiO₂
and a maximum of 1.5% by weight of further components.

8. A process for producing high temperature resistant inorganic fibers based on silica according to any of claims 1 to 7, **characterized in that** said process comprises the following steps:
a) melting a starting glass composition having the following composition:
55-80% by weight of SiO₂
5-19% by weight of Al₂O₃
15-26% by weight of Na₂O
2-12% by weight of ZrO₂ and/or 2-12% by weight of TiO₂
and a maximum of 1.5% by weight of further components;
b) forming filaments or staple fibers from the melt in step a);
c) acid extraction of the filaments or staple fibers obtained in step b);
d) rinsing the extracted filaments or staple fibers from step c) to remove residual acid and/or salt residues; and
e) drying the filaments or staple fibers obtained in step d).

9. A process for producing high temperature resistant inorganic fibers based on silica according to claim 8, **characterized in that** the acid treatment in step c) is performed with an inorganic acid, in particular hydrochloric acid, sulfuric acid, nitric acid or phosphoric acid, or with an organic acid, in particular acetic acid, formic acid or oxalic acid.

10. A process for producing high temperature resistant inorganic fibers based on silica according to claim 8 or claim 9, **characterized in that** the acid extraction is performed at a temperature of 35-80 °C and for a period of at least six hours.

11. The use of a high temperature resistant inorganic fiber based on silica according to any of claims 1 to 7 or obtained by a process according to any of claims 8 to 10 for producing high tensile strength yarns.

12. The use of a high temperature resistant inorganic fiber based on silica according to any of claims 1 to 7 or obtained by a process according to any of claims 8 to 10 for producing mounting mats for catalysts.

13. A fiber product of a high temperature resistant inorganic fiber based on silica according to any of claims 1 to 7 or obtained by a process according to any of claims 8 to 10.

14. A fiber product according to claim 13, **characterized in that** said fiber product is selected from staple fibers, high tensile strength yarns, twisted yarns, nonwovens, woven fabrics, webs, ribbons, packages, and knitted fabrics.

15. A fiber product according to claim 13 or claim 14, **characterized in that** said fiber product is selected from mounting mats for the automobile and commercial vehicle industry, products for furnace construction, products for the fire protection industry, and personal protective equipment.

## Revendications

1. Fibre anorganique résistant à de hautes températures, sur base d'acide silique, **caractérisée en ce qu'**elle présente la composition suivante :
de 81 à 94 % en poids de SiO₂
de 6 à 19 % en poids d'Al₂O₃
de 2 à 12 % en poids de ZrO₂ et/ou de 2 à 12 % en poids de TiO₂
de 0 à 3 % en poids de Na₂O
ainsi qu'un maximum de 1,5 % en poids de composants supplémentaires.

2. Fibre anorganique résistant à de hautes températures sur base d'acide silique selon la revendication 1, **caractérisée en ce que** les composants supplémentaires sont choisis parmi le Li₂O, le K₂O, le CaO, le MgO, le SrO, le BaO, l'Y₂O₃, le La₂O₃, le Fe₂O₃, ainsi que des mélanges de ces derniers.

3. Fibre anorganique résistant à de hautes températures sur base d'acide silique selon la revendication 1 ou 2, **caractérisée en ce que** cette dernière comporte de 6 à 13 % en poids d'Al₂O₃, notamment de 8 à 13 % en poids d'Al₂O₃ et de manière particulièrement préférée de 8 à 11 % en poids d'Al₂O₃.

4. Fibre anorganique résistant à de hautes températures sur base d'acide silique selon l'une quelconque des revendications 1 à 3, **caractérisée en ce que** cette dernière comporte de 2 à 9 % en poids de ZrO₂, notamment de 3 à 7 % en poids de ZrO₂ et/ou de 2 à 9 % en poids de TiO₂, notamment de 3 à 7 % en poids de TiO₂.

5. Fibre anorganique résistant à de hautes températures sur base d'acide silique selon l'une quelconque des revendications 1 à 4, **caractérisée en ce que** cette dernière comporte de 0 à 2 % en poids de Na₂O, de préférence de 0 à 1 % en poids de Na₂O, de manière particulièrement préférée de 0 à 0,5 % en poids de Na₂O.

6. Fibre anorganique résistant à de hautes températures sur base d'acide silique selon l'une quelconque des revendications 1 à 5, **caractérisée en ce que** cette dernière se présente sous la forme de filaments ou de fibres discontinues.

7. Fibre anorganique résistant à de hautes températures sur base d'acide silique selon l'une quelconque des revendications 1 à 6, **caractérisée en ce que** celle-ci peut être obtenue par une extraction à l'acide d'une composition de verre, avec la composition suivante :
de 55 à 80 % en poids de SiO₂
de 5 à 19 % en poids d'Al₂O₃
de 15 à 26 % en poids de Na₂O et/ou de 2 à 12 % en poids de TiO₂
ainsi qu'un maximum de 1,5 % en poids de composants supplémentaires.

8. Procédé destiné à fabriquer des fibres anorganiques résistant à de hautes températures sur base d'acide silique selon l'une quelconque des revendications 1 à 7, **caractérisé en ce qu'**il comporte les étapes suivantes :
a) Fusion d'une composition de départ, laquelle présente la composition suivante :
de 55 à 80 % en poids de SiO₂
de 5 à 19 % en poids d'Al₂O₃
de 15 à 26 % en poids de Na₂O
de 2 à 12 % en poids de ZrO₂ et/ou de 2 à 12 % en poids de TiO₂
ainsi qu'un maximum de 1,5 % en poids de composants supplémentaires ;
b) Formation de filaments ou de fibres discontinues à partir de la masse fondue dans l'étape a) ;
c) Extraction à l'acide des filaments ou fibres discontinues obtenues lors de l'étape b) ;
d) Rinçage des filaments ou fibres discontinues extrait(e)s de l'étape c), pour éliminer des restes d'acide et/ou des restes de sel ; et
e) Séchage des filaments ou fibres continues obtenu(e)s lors de l'étape d).

9. Procédé destiné à fabriquer des fibres anorganiques résistant à de hautes températures sur base d'acide silique selon la revendication 8, **caractérisé en ce qu'**on réalisé le traitement à l'acide dans l'étape c) avec un acide anorganique, notamment avec de l'acide muriatique, de l'acide sulfurique, de l'acide nitrique ou de l'acide phosphorique ou avec un acide organique, notamment de l'acide acétique, de l'acide formique ou de l'acide oxalique.

10. Procédé destiné à fabriquer des fibres anorganiques résistant à de hautes températures sur base d'acide silique selon la revendication 8 ou 9, **caractérisé en ce qu'**on réalise l'extraction à l'acide à une température de 35 à 80 °C et pour une durée d'au moins 6 heures.

11. Utilisation d'une fibre anorganique résistant à de hautes températures sur base d'acide silique selon l'une quelconque des revendications 1 à 7 ou obtenue d'après un procédé selon l'une quelconque des revendications 8 à 10 pour fabriquer des fils résistant à la traction.

12. Utilisation d'une fibre anorganique résistant à de hautes températures sur base d'acide silique selon l'une quelconque des revendications 1 à 7 ou obtenue d'après un procédé selon l'une quelconque des revendications 8 à 10 pour fabriquer des nattes de support pour des catalyseurs.

13. Produit fibreux en une fibre anorganique résistant à de hautes températures sur base d'acide silique selon l'une quelconque des revendications 1 à 7 ou obtenu d'après un procédé selon l'une quelconque des revendications 8 à 10.

14. Produit fibreux selon la revendication 13, **caractérisé en ce qu'**il est choisi parmi des fibres découpées, des fils résistant à la traction, des fils retors, des non-tissés, des tissus, des bandes, des bourrages, des maillages et des tricotages.

15. Produit fibreux selon la revendication 13 ou 14, **caractérisé en ce qu'**il est choisi parmi des nattes de support pour l'industrie automobile et des véhicules utilitaires, des produits pour la construction de poêles, des produits pour l'industrie pour la protection contre les incendies, ainsi que des équipements individuels de sécurité.
